# EUROPÄISCHE PATENTSCHRIFT

(11) **EP 2 705 174 B1**
(45) Veröffentlichungstag und Bekanntmachung des Hinweises auf die Patenterteilung: **04.10.2017**
(21) Anmeldenummer: 12726579.1
(22) Anmeldetag: 19.04.2012
(51) Int. Cl.: C25B 9/08, C25B 9/20

(54) **ELEKTROCHEMISCHE ZELLE MIT RAHMENDICHTUNG ZUR ALTERNATIVEN ABDICHTUNG GEGEN RANDLÄUFIGKEITEN DES ELEKTROLYTEN**
ELECTROCHEMICAL CELL HAVING A FRAME SEAL FOR ALTERNATIVE SEALING AGAINST MARGINAL LEAKAGES OF THE ELECTROLYTE
CELLE ÉLECTROCHIMIQUE DOTÉE D'UN JOINT DE CADRE POUR L'ÉTANCHÉITÉ CONTRE DES FUITES DE BORD DE L'ÉLECTROLYTE

(30) Priorität: 06.05.2011 DE 102011100768
(43) Veröffentlichungstag der Anmeldung: 12.03.2014
(73) Patentinhaber: Thyssenkrupp Uhde Chlorine Engineers (Italia) S.r.l., 20134 Milan (IT)
(72) Erfinder: KIEFER, Randolf, 45772 Marl (DE); WOLTERING, Peter, 48485 Neuenkirchen (DE); WEBER, Rainer, 51519 Odenthal (DE); BULAN, Andreas, 40764 Langenfeld (DE); GROSSHOLZ, Michael, 51375 Leverkusen (DE)
(74) Vertreter: Reitstötter Kinzebach
(86) Internationale Anmeldenummer: PCT/EP2012/001682
(87) Internationale Veröffentlichungsnummer: WO 2012/152367

(56) Entgegenhaltungen:
- WO-A1-01/57290
- JP-A- 61 056 290
- US-A- 4 274 939
- US-A- 4 748 092
- US-A1- 2003 027 032

## Beschreibung

Die vorliegende Erfindung kann in den technischen Bereich der elektrochemischen Geräte eingeordnet werden.

Die vorliegende Erfindung betrifft einen elektrochemischen Apparat wie er im Oberbegriff des Anspruch 1 charakterisiert ist. Hierunter wird ein Apparat verstanden, in dem eine elektrochemische Reaktion abläuft, wie beispielsweise bei Elektrolyseuren, Batterien, Akkumulatoren oder Brennstoffzellen.

Zum Beispiel bei der Elektrolyse wird elektrische Energie in chemische Energie umgewandelt. Dies wird erreicht durch die Aufspaltung einer chemischen Verbindung unter Einwirkung eines elektrischen Stroms. Die als Elektrolyt eingesetzte Lösung enthält positiv und negativ geladene Ionen. Als Elektrolyte kommen demzufolge hauptsächlich Säuren, Basen oder Salzlösungen zur Anwendung.

Beispielsweise bei der elektrolytischen Herstellung von Halogengasen aus wässriger Alkalihalogenidlösung - hier mit Natriumchlorid dargestellt - läuft auf Seiten der Anode die nachstehende Reaktion ab:

(1) 4 NaCl → 2Cl₂ + 4Na⁺ + 4e⁻

Die frei werden Alkali-Ionen gelangen zur Kathode und bilden mit den dort entstehenden Hydroxidionen Alkalilauge. Außerdem wird Wasserstoff gebildet:

( 2)

4H₂O + 4e⁻ → 2H₂ + 4OH⁻

Dabei wird die entstehende Lauge vom Alkali-Halogenid, das der Anodenseite zugeführt wird, über eine Kationenaustauscher-Membran getrennt, und dadurch voneinander separiert. Derartige Membranen sind Stand der Technik und kommerziell von verschiedenen Anbietern erhältlich.

Das Standardpotential an der Anode, das sich bei Ablauf von oben stehender Reaktion ausbildet, beträgt im Fall der Chlorbildung + 1,36 V, wobei das Standardpotential an der Kathode bei Ablauf von oben stehender Reaktion - 0,86 V beträgt. Ein derartiges Zellendesign ist beispielsweise aus der WO98/55670 bekannt. Aus der Differenz dieser beiden Standardpotentiale resultiert ein immenser Energieeintrag, der nötig ist, um diese Reaktionen durchzuführen. Um diesen Differenzbetrag zu minimieren, werden nun Gas-Diffusions-Elektroden (nachfolgend als GDE abgekürzt) auf der Kathodenseite eingesetzt, so dass Sauerstoff über das System eingetragen wird und dadurch bedingt an der Kathode nicht mehr Reaktion (2) abläuft, sondern die nachfolgende Reaktion:

(3) O₂ + 2 H₂O + 4e⁻ → 4 OH⁻

Der Sauerstoff kann hierbei als reines Gas oder über Luft eingetragen werden. Die der Chlor-Alkali-Elektrolyse mit Gas-Diffusions-Elektroden zugrundeliegende Gesamtreaktion ergibt sich daraus wie folgt:

(4) 4 NaCl + O₂ + 2 H₂O → 4 NaOH + 2 Cl₂

Da das Standardpotential der Reaktion (3) bei + 0,4 V liegt, führt im Vergleich zur herkömmlichen Elektrolyse mit Wasserstoffbildung die GDE-Technik zu einer beträchtlichen Energieeinsparung.

Gas-Diffusions-Elektroden werden seit vielen Jahren in Batterien, Elektrolyseuren und Brennstoffzellen eingesetzt. Der elektrochemische Umsatz findet innerhalb dieser Elektroden nur an der sogenannten Drei-Phasen-Grenze statt. Als Drei-Phasen-Grenze wird der Bereich bezeichnet, bei dem Gas, Elektrolyt und metallischer Leiter aufeinander treffen. Damit die GDE effektiv arbeitet, sollte der metallische Leiter gleichzeitig ein Katalysator für die gewünschte Reaktion sein. Typische Katalysatoren in alkalischen Systemen sind Silber, Nickel, Mangandioxid, Kohlenstoff und Platin. Damit die Katalysatoren besonders wirksam sind, muss deren Oberfläche groß sein. Dies wird erreicht durch feine oder poröse Pulver mit innerer Oberfläche.

Probleme bei der Anwendung derartiger Gas-Diffusions-Elektroden, wie sie beispielsweise in der US 4614575 offenbart sind, ergeben sich dadurch, dass der Elektrolyt, bedingt durch Kapillarwirkung in diese feinporigen Strukturen eindringen und diese füllen würde. Dieser Effekt hätte zur Folge, dass der Sauerstoff nicht mehr durch die Poren diffundieren könnte, wodurch die beabsichtigte Reaktion zum Stillstand käme.

Damit die Reaktion an der Drei-Phasen-Grenze effektiv ablaufen kann, muss oben genanntes Problem vermieden werden, indem die Druckverhältnisse entsprechend gewählt werden. Die Ausbildung einer Flüssigkeitssäule in einer ruhenden Flüssigkeit, wie dies in der Elektrolytlösung der Fall ist, bedingt beispielsweise, dass der hydrostatische Druck am unteren Ende der Säule am höchsten ist, was oben beschriebenes Phänomen verstärken würde.

Dieses Problem wird wie in der einschlägigen Literatur zu finden ist, in Form von Fallfilmverdampfern gelöst. Dabei lässt man den Elektrolyten - beispielsweise Natronlauge NaOH oder Kalilauge KOH - zwischen der Membran und der GDE durch ein poröses Medium laufen, womit die Ausbildung einer hydrostatischen Säule verhindert wird. Man spricht auch von Percolatortechnologie.

In WO 03/42430 ist eine solche Elektrolysezelle beschrieben, die sich dieses Prinzip für die Chlor-Alkali-Elektrolysereaktion mit einer Sauerstoffverbrauchsreaktion zunutze macht. Der Sauerstoff ist dabei vom porösen Medium durch die Gas-Diffusions-Elektrode getrennt und wird durch eine leitfähige Stützstruktur und ein leitfähiges flexibles Federelement mit dem porösen Medium - dem Percolator - verpresst.

Ein derartiges Prinzip findet sich beispielsweise auch in der DE102004018748. Hier ist eine elektrochemische Zelle beschrieben, die aus wenigstens einer Anodischen Halbzelle mit einer Anode, einer kathodischen Halbzelle mit einer Kathode und einer zwischen beiden Halbzellen angeordneten Ionenaustauschermembran besteht, wobei die Anode und/oder Kathode eine Gas-Diffusions-Elektrode ist, zwischen der Gas-Diffusions-Elektrode und der Ionenaustauscher-Membran ein Spalt, ein Elektrolytzulauf oberhalb des Spalts und ein Elektrolytablauf unterhalb des Spalts sowie ein Gaseintritt und ein Gasaustritt angeordnet sind, wobei der Elektrolytzulauf mit einem Elektrolytvorlagebehälter verbunden ist und einen Überlauf aufweist.

Der Einsatz der Gas-Diffusions-Elektrode in den beschriebenen Elektrolyseapparaten hat aber nicht nur die Aufgabe, die katalytische Sauerstoffverbrauchsreaktion zu ermöglichen. Die Elektrode soll darüber hinaus auch die Trennung von Elektrolyten und Gas beidseitig der GDE sicherzustellen. Dazu ist eine gas- bzw. flüssigkeitsdichte Abdichtung der Gas-Diffusions-Elektroden durch die gewählte Befestigungsmethode zwingend erforderlich, um vor allem nach Elektrolyteintritt in die Halbzelle zu gewährleisten, dass der Elektrolyt an der Gas-Diffusions-Elektrode bestimmungsgemäß entlang geleitet wird und nicht über nicht hinreichend abgedichtete Bereiche und damit alternative Wege außerhalb des porösen Mediums - des Percolators - zum Elektrolytauslass aus der elektrochemischen Halbzelle gelangt und somit für die Reaktion nicht zur Verfügung steht.

Da die Gas-Diffusions-Elektroden einem Alterungsprozeß und damit Verschleiß unterliegen, müssen diese nach einer bestimmten Betriebszeit ausgetauscht werden. Der Stand der Technik sieht vor, dass die Gas-Diffusions-Elektroden in die Kathodenhalbschalen eingeschweißt werden, was einen Austausch sehr aufwendig macht.

Dies ist beispielsweise in DE 103 30 232 A1 ausgeführt. Hier wird eine elektrochemische Halbzelle beschrieben, bei der die GDE einen beschichtungsfreien Randbereich aufweist, mit einer Haltestruktur verbunden ist, die mit einer elektrisch leitfähigen Platte verschweißt ist. Neben der schwierigen Austauschbarkeit ist ein weiterer wesentlicher Nachteil dieser Technik, dass sehr viel aktive Elektrodenfläche durch entstehende Schweißnähte verloren wird, wodurch die Effektivität der Elektrolysezelle sinkt.

Eine alternative Befestigungsmöglichkeit der Gas-Diffusions-Elektroden ist in DE 101 52 792 erläutert. Hier wird eine Methode beschrieben, eine Gas-Diffusions-Elektrode mittels eines falzartig umlaufenden Rahmen mit der Grundstruktur des Elektrolyseapparats zu verbinden. Als reines Klemmverfahren ist dieses Verfahren in Bezug auf Austauschbarkeit vorteilhafter als das in DE 103 30 232 beschriebene. Da aber auch in diesem Fall zur Minimierung der ohmschen Verluste die Verbindung des Rahmens mit der Grundstruktur über Schweiß- oder Lötverfahren ausgeführt ist, bleibt sowohl der Nachteil der schwierigen Austauschbarkeit als auch der Verlust an aktiver Elektrolysefläche durch den Schweißbereich bestehen.

In DE 103 21 681 A1 sind Dichtungen für Elektrolysezellenanordnungen offenbart, die eine erste Folienoberfläche und eine zweite Folienoberfläche, sowie eine im wesentlichen Abstandshalterfunktion übernehmende, schnurförmige erste Dichtungskomponente und eine schnurförmige zweite Dichtungskomponente, die zwischen der ersten Folienoberfläche und der zweiten Folienoberfläche beabstandet zueinander verlaufen. Die Anordnung in der Zelle ist derart vorgesehen, dass eine Dichtungskomponente mit der Membran überlappt, woraufhin eine Bohrung folgt und dann im Außenbreich der Elektrolysezelle die zweite Dichtungskomponente vorgesehen ist, die nur noch Abstands-haltende Wirkung und keine Dichtwirkung mehr aufweist. Nachteil ist, dass eine vollständige Dichtung auf diese Art und Weise nicht erreicht werden kann und es zu Leckagen über die Bohrungen kommen kann.

Die US 4 721 555 A beschreibt eine elektrochemische Zelle, in der in dem Überlappungsbereich von Membran und Zellrahmen eine umlaufende Rahmendichtung angebracht ist, die mehrere Profilierungen aufweist. Hier besteht ebenfalls nach wie vor das Risiko der Leckage.

Aufgabe der vorliegenden Erfindung ist es deshalb, eine technische Lösung zu finden, die zunächst eine hinreichende Abdichtung vor allem des Gasraums gegen den Elektrolytraum gewährleistet , um zu verhindern, dass Elektrolyt über nicht ausreichend abgedichtete Bereiche wie die senkrechten Randbereiche zwischen Gas-Diffusions-Elektrode und Isolierrahmendichtung zum Elektrolytablauf gelangen kann und damit für die elektrochemische Reaktion nicht zur Verfügung steht. Außerdem soll gleichzeitig die Gas-Diffusions-Elektrode in der elektrochemischen Zelle befestigt werden, um einen einfachen Ein- und Ausbau der Gas-Diffusions-Elektrode zu gewährleisten und damit eine möglichst große aktive Elektrodenfläche zur Nutzung der elektrochemischen Reaktion zur Verfügung zu stellen. Zudem soll die Abdichtung die elektrische Isolierung der Anode von der Kathode sicherstellen, um die bestimmungsgemäße Funktionsweise der elektrochemischen Zelle zu ermöglichen.

Die Aufgabe wird gelöst durch eine elektrochemische Zelle, umfassend eine Anoden- (14) und eine Kathodenhalbschale (15), die durch eine Membran (8) voneinander separiert werden, aufweisend die entsprechenden Elektroden, und die Anoden- (14) und die Kathodenhalbschale (15), jeweils eine Außenwandung (12,13) besitzen, die jeweils im Kontaktbereich beider Halbschalen Flanschbereiche (16,17) aufweisen, die rahmenartig ausgestaltet sind, und die Flanschbereiche (16 und 17) Montagebohrungen (4) aufweisen, die einen Innenbereich (23) und einen Außenbereich (24) der elektrochemischen Zelle kennzeichnen und eine Gas-Diffusions-Elektrode (6), die auf einem Stützsystem (7) aufliegt, und ein poröses Medium (9), das auf der Gas-Diffusions-Elektrode (6) aufliegt, sowie Vorrichtungen zum Zu- und Abführen von Gas (18,19) und Elektrolyt (20,21).

Insbesondere zeichnet sich die vorliegende Erfindung dadurch aus, dass mindestens eine umlaufende Rahmendichtung (3) im Kontaktbereich beider Halbschalen zwischen den rahmenartigen Flanschbereichen (16 und 17) der Außenwandungen (12 und 13) beider Halbschalen vorgesehen ist, die auf der Membran (8) aufliegt, wobei das poröse Medium (9) und die Gas-Diffusions-Elektrode (6) auf dem rahmenartigen kathodischen Flanschbereich (17) aufliegen und die umlaufende Rahmendichtung (3) in diesem Bereich mit dem porösen Medium (9) und der Gas-Diffusions-Elektrode (6) überlappt, wobei dieser Überlappungsbereich (2) mindestens zwei Profilierungen (1) aufweist, wobei die umlaufende Rahmendichtung im Kontaktbereich beider Halbschalen zwischen den rahmenartigen Flanschbereichen (16 und 17) außerhalb des Überlappungsbereichs von porösem Medium (9) und Gas-Diffusions-Elektrode (6) mindestens eine weitere Profilierung (22) aufweist und/oder mindestens eine verformbare Dichtschnur angeordnet ist, wobei die weitere Profilierung (22) und/oder die verformbare Dichtschnur (5) im Innenbereich (23) der elektrochemischen Zelle angeordnet ist.

Durch die beanspruchte Platzierung der Dichtung in der elektrochemischen Zelle, kann eine hinreichende Abdichtung erzielt werden und die Nachteile des Standes der Technik können vermieden werden.

In vorteilhafter Ausgestaltung besitzt die Vorrichtung Profilierungen (1), die jedwede geometrische Ausgestaltung aufweisen, und bevorzugt eine Dreiecksform, eine Trapezform oder eine Halbkugelform aufweisen.

In bevorzugter Ausführungsform ist die Rahmendichtung (3) bis zu Temperaturen von ca. 100°C aus einem Lauge- und Sauerstoff-resistenten Material aufgebaut

Des Weiteren beansprucht die vorliegende Erfindung Verwendungsmöglichkeiten der erfindungsgemäßen elektrochemischen Zelle als Elektrolysezelle in einem Elektrolyseur, in dem eine Vielzahl von Elektrolysezellen stapelförmig angeordnet wird.

Mit Vorteil wird die vorliegende elektrochemische Zelle in einer Batterie verwendet, in der chemische Energie durch eine elektrochemische Redoxreaktion in elektrische Energie umgewandelt wird.

Eine weitere Verwendungsmöglichkeit der elektrochemischen Halbzelle besteht durch den Einsatz in einer Brennstoffzelle, in der chemische Energie durch Zuführen eines Brennstoffes und eines Oxidationsmittels in elektrische Energie umgewandelt wird.

Nachfolgend soll anhand von Fig. 1-6 die Ausführungsvarianten der Erfindung näher erläutert werden.
- Fig. 1:: Eine schematische Verfahrensskizze einer erfindungsgemäßen elektrochemischen Zelle in Gesamtansicht im Schnitt von oben
- Fig. 2a-b:: Eine schematische Verfahrensskizze der prinzipiellen Anordnung der Komponenten im Flanschbereich einer erfindungsgemäßen elektrochemischen Zelle mit Abdichtungsvarianten nach außen
- Fig. 3a-b:: Eine schematische Verfahrensskizze des Flanschbereichs einer erfindungsgemäßen elektrochemischen Zelle im montierten Zustand zur Darstellung des Wirkprinzips der Rahmendichtung mit Abdichtungsvarianten nach außen
- Fig. 4:: Schematische Verfahrensskizze der Rahmendichtung mit und ohne Montagebohrungen für Verschraubungen einer erfindungsgemäßen elektrochemischen Zelle
- Fig. 5:: Eine schematische Verfahrensskizze eines Eckbereichs der Rahmendichtung einer erfindungsgemäßen elektrochemischen Zelle
- Fig. 6a-f:: Schematische Verfahrensskizzen der Ausgestaltung der Profilierung der Rahmendichtung einer erfindungsgemäßen elektrochemischen Zelle

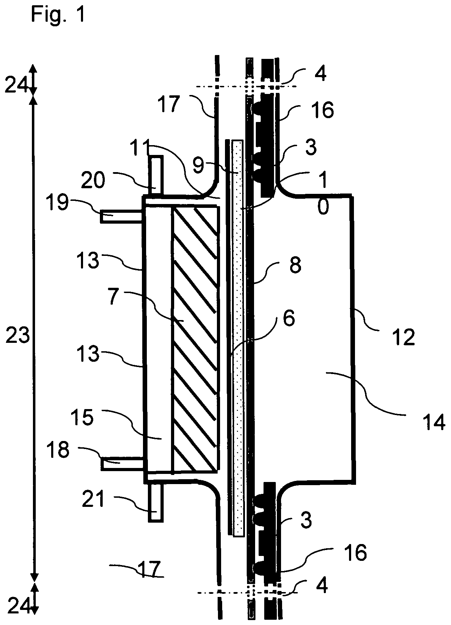

Fig. 1 zeigt eine erfindungsgemäße elektrochemischen Zelle, die eine Anodenhalbschale 14 und eine Kathodenhalbschale 15 umfasst, die durch eine Membran 8 voneinander separiert werden. Beide Halbschalen 14, 15 besitzen Außenwandungen 12 und 13 und rahmenartig ausgestaltete Flanschbereiche 16 und 17. Zwischen die rahmenartigen Flanschbereiche der Kathodenhalbschale 16 und die Flanschbereiche der Anodenhalbschale 17 können Membran 8, poröse Medien 9, die Rahmendichtungen 3 zur elektrischen Isolierung der Anode von der Kathode und eventuell weitere Komponenten geklemmt werden. Durch diese Klemmung kann beispielsweise die Fixierung der Membran 8 und des porösen Mediums 9 erreicht werden, sowie die Abdichtung der elektrochemischen Zelle nach außen. Das poröse Medium 9 dient im Betrieb der elektrochemischen Zelle als Percolator, wobei Elektrolyt zwischen der Membran 8 und der Gas-Diffusions-Elektrode 6 durch den Elektrolytraum 10, den Percolator, geleitet werden. Das für die elektrochemische Reaktion notwendige Gas sowie Elektrolyt werden durch entsprechende Vorrichtungen zugeführt 18, 20 bzw. abgeführt 19, 21.

Die Gas-Diffusions-Elektrode 6 wird durch Stützelemente 7 in der Elektrolysezelle gehalten. Die Gas-Diffusions-Elektrode 6 selbst ist aus einem Flüssigkeits-durchlässigen Träger, der mit einem Katalysatormaterial beschichtet ist, aufgebaut. Dabei bildet der mit Katalysator beschichtete Bereich der Gas-Diffusions-Elektrode 6 den aktiven Bereich, an dem die elektrochemische Reaktion der Kathode abläuft. Dieser aktive Bereich umfasst die gesamte Gas-Diffusions-Elektrode, bis auf den Dichtungsbereich, der konstruktiv möglichst gering auszuführen ist, um die größtmögliche aktive Fläche der Gas-Diffusions-Elektrode 6 zur elektrochemischen Reaktion zu erhalten.

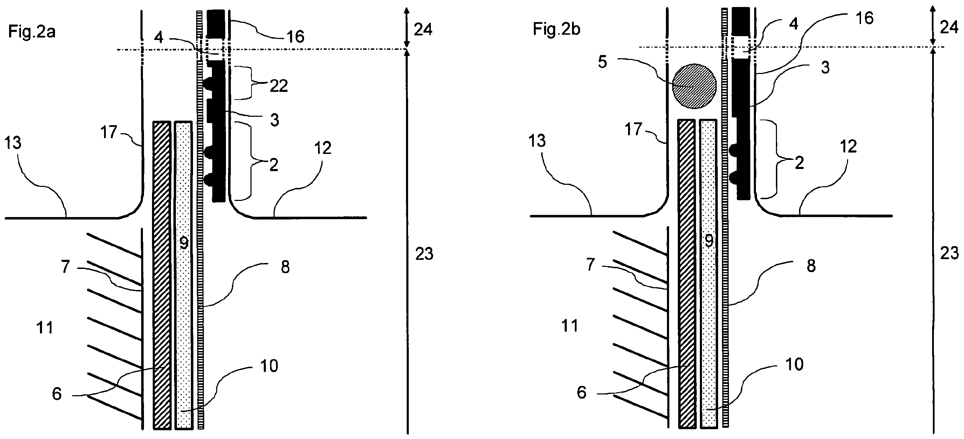

Der Dichtbereich ist durch den Kontaktbereich beider Halbschalen zwischen den rahmenartigen Flanschbereichen 16 und 17 der Außenwandungen 12 und 13 beider Halbschalen definiert, wobei die Montagebohrungen 4 einen Innenraum 23 und einen Außenraum 24 der elektrochemischen Zelle kennzeichnen. Die prinzipielle Anordnung der Komponenten ist detailliert in Fig. 2a-b dargestellt: Gas-Diffusions-Elektrode 6 und poröses Medium 9 liegen auf dem kathodischen Flanschbereich 17 auf, wobei die umlaufende Rahmendichtung 3 in diesem Bereich mindestens zwei Profilierungen aufweist, die mit der Gas-Diffusions-Elektrode 6 und dem porösen Medium 9 überlappen und beide Komponenten mit der dazwischen angeordneten Membran 8 im montierten Zustand verpresst werden. Mindestens eine weitere Profilierung (22) ist außerhalb des Überlappungsbereichs von porösem Medium (9) und Gas-Diffusions-Elektrode (6) vorgesehen, die sich aber nach wie vor im Innenbereich (23) der elektrochemischen Zelle befindet. Hier spricht man auch von einem äußeren profilierten Bereich der Rahmendichtung. Im Außenbereich der elektrochemischen Zelle (24) ist die Rahmendichtung (3) keilförmig ausgestaltet und weist keinerlei zusätzliche Profilierungen auf. Auf diese Art der Anordung der Rahmendichtung in der elektrochemischen Zelle kann die Leckagerate bis auf ein Minimum reduziert werden.

Eine weitere Ausführungsvariante zur verbesserten Abdichtung der elektrochemischen Zelle gegen Austritt von Elektrolyt oder Gas nach außen ist in Fig. 2b dargestellt. Fig. 2b zeigt die Anordnung einer zusätzlichen verformbaren Dichtschnur, die sich im Kontaktbereich beider Halbschalen zwischen den rahmenartigen Flanschbereichen 16 und 17 außerhalb des Überlappungsbereichs von porösem Medium 9 und Gas-Diffusions-Elektrode 6 im Innenraum (23) der elektrochemischen Zelle befindet.

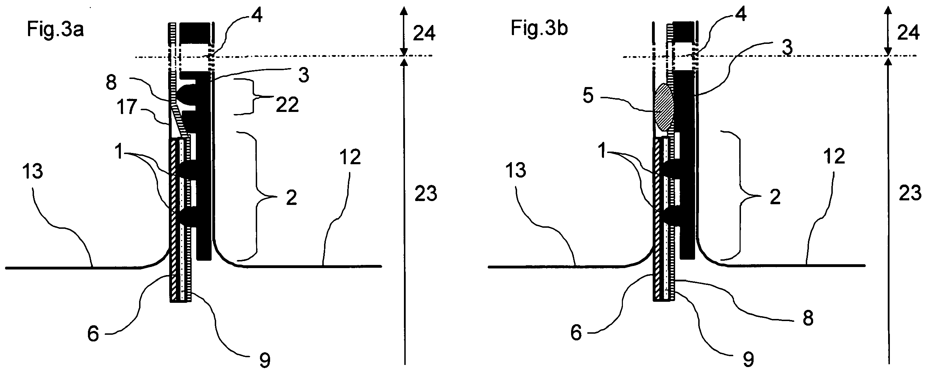

Fig. 3a-b zeigt den Kontaktbereich beider Halbschalen zwischen den rahmenartigen Flanschbereichen 16 und 17 im montierten und verpressten Zustand zur Veranschaulichung der umlaufenden internen Abdichtung des porösen Mediums gegen Randläufigkeiten. Dies wird durch das Zusammenspiel der mindestens zwei Profilierungen erreicht, die sich im Überlappungsbereich (2) mit dem porösen Medium (9) und der Gas-Diffusions-Elektrode (6) befinden und der mindestens einen weiteren Profilierung (22), die sich außerhalb des Überlappungsbereichs von porösem Medium (9) und Gas-Diffusions-Elektrode (6) befindet, aber im Innenbereich (23) der elektrochemischen Zelle angeordnet ist. Die innere Profilierung 1 der Rahmendichtung 3 presst die Membran 8 und das poröse Medium 9 auf die durch den kathodischen Flanschbereich 17 gestützte Gas-Diffusions-Elektrode 6 und die weitere Profilierung (22) presst die Membran 8 an den Flanschbereich 17. Durch die mindestens zwei inneren Profilierungen, die auf der Rahmendichtung 3 vorgesehen sind, wird ein Austritt von Flüssigkeit über die Profilierung hinaus verhindert. Die Abdichtung nach außen wird durch die Verpressung der Membran 8 zwischen kathodischen Flanschbereich 17 und die weitere Profilierung (22) der Rahmendichtung 3 erreicht, wie in Fig. 3a dargestellt. Dabei wird die Membran 8 direkt auf dem rahmenartigen kathodischen Flanschbereich 17 angepresst.

Eine weitere Ausführungsvariante zur verbesserten Abdichtung der elektrochemischen Zelle gegen Austritt von Elektrolyt oder Gas nach außen zeigen Fig. 3b. In Fig 3b ist die Verwendung einer zusätzlichen verformbaren Dichtschnur dargestellt, die sich im Kontaktbereich beider Halbschalen zwischen den rahmenartigen Flanschbereichen 16 und 17 außerhalb des Überlappungsbereichs von porösem Medium 9 und Gas-Diffusions-Elektrode 6, im Innenbereich (23) der elektrochemischen Zelle befindet, und im montierten Zustand zwischen Membran 8 und kathodischem Flanschbereich 17 verpresst wird und dadurch eine verbesserte Abdichtung sicherstellt und die weitere Profilierung 22 entweder ersetzt oder in Kombination mit dieser eingesetzt wird.

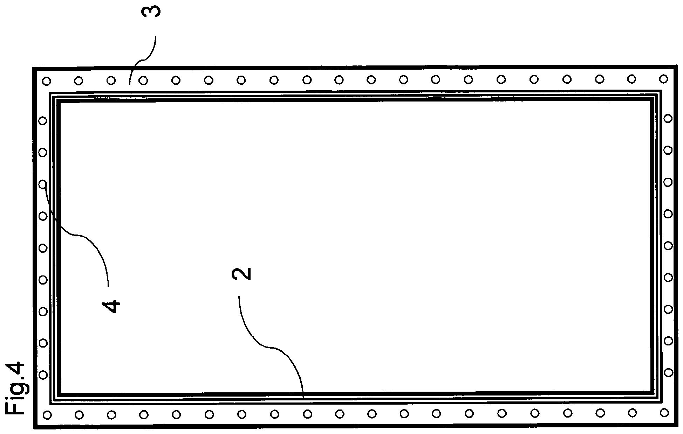

Fig. 4 zeigt eine Gesamtansicht der Rahmendichtung 3 mit dem inneren profilierten Bereich 2 bestehend aus zwei innenliegenden Profilierungen 1 zur hinreichenden Flüssigkeitsabdichtung, die sich im Überlappungsbereich von porösem Medium (9) und der Gas-Diffusions-Elektrode (6) befinden und mindestens einer weiteren zusätzlichen Profilierung , die sich außerhalb dieses Überlappungsbereichs befindet, aber im Innenraum der elektrochemischen Zelle angeordnet ist Das Verpressen der Rahmendichtung wird durch Verschrauben über die Montagebohrungen 4 erreicht.

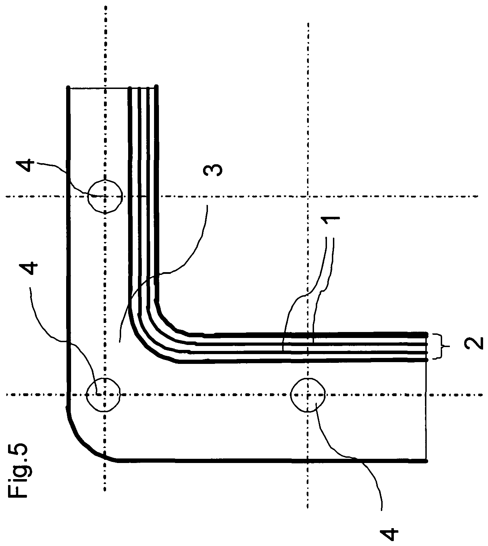

Fig. 5 zeigt detailliert eine Ausgestaltung der Rahmendichtung 3 mit Montagebohrungen 4, wobei die Montagebohrungen mittig in gleichmäßigem Abstand angeordnet sind und im Eckenbereich einen rechten Winkel bilden.

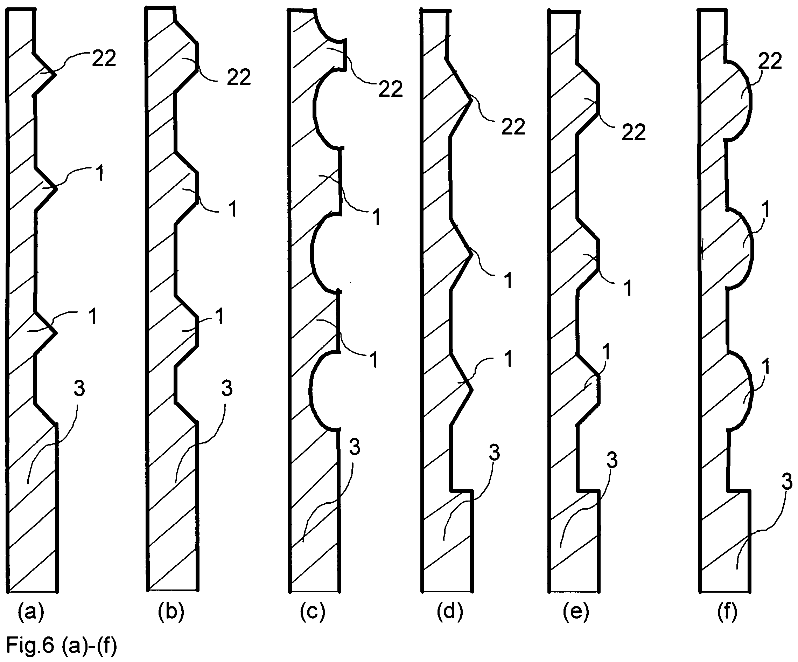

Fig. 6 zeigt in den Varianten a) bis f) beispielhafte Ausgestaltungen der Profilierungen 1 und der weiteren Profilierung 22, die jedwede geometrische Ausgestaltung aufweisen können, beispielsweise Dreiecksformen (Fig. 6a und 6d), Trapezformen (Fig. 6b und 6e) oder Halbkugelformen (Fig. 6c und 6f). Die Fertigung der Profilierungen kann dabei über direktes Einprägen der Profilierungen (Fig. 6a - 6c) oder durch Abnehmen des Materials um die Profilierungen herum (Fig. 6d -6f) erreicht werden.

Vorteile, die sich aus der Erfindung ergeben:
- hinreichende Abdichtung des Elektrolytraum (poröses Medium) durch die erfindungsgemäße Profilierung der Rahmendichtung zur Verpressung und Fixierung von porösem Medium und Membran mit der Gas-Diffusions-Elektrode gewährleistet
- Elektrische Isolierung von Anode und Kathode
- einfacher Ein- und Ausbau der Gas-Diffusions-Elektrode
- große aktive Elektrodenoberfläche aufgrund kleiner inaktiver Dichtfläche steht zur Verfügung, die für die elektrochemische Reaktion genutzt werden kann
- Verhinderung von Randbereichen zwischen Gas-Diffusions-Elektrode und porösem Medium einerseits und Dichtschnur zur externen Abdichtung andererseits, durch den Elektrolyt zum Elektrolytablauf gelangen kann und damit für die elektrochemische Reaktion nicht zur Verfügung steht.

### Bezugszeichenliste

- 1: Profilierung
- 2: Innerer profilierter Bereich der Rahmendichtung
- 3: Rahmendichtung
- 4: Montagebohrung für Verschraubung
- 5: Dichtschnur
- 6: Gas-Diffusions-Elektrode
- 7: Stützsystem
- 8: Membran
- 9: poröses Medium
- 10: Elektrolytraum
- 11: Gasraum
- 12: Außenwandung Anodenhalbschale
- 13: Außenwandung Kathodenhalbschale
- 14: Anodenhalbschale
- 15: Kathodenhalbschale
- 16: Flanschbereich der Anodenhalbschale
- 17: Flanschbereich der Kathodenhalbschale
- 18: Vorrichtung für Gaszufuhr
- 19: Vorrichtung für Gasabfuhr
- 20: Vorrichtung für Elektrolytzufuhr
- 21: Vorrichtung für Elektrolytabfuhr
- 22: weitere Profilierung
- 23: Innenbereich der elektrochemischen Zelle
- 24: Außenbereich der elektrochemischen Zelle

## Patentansprüche

1. Elektrochemische Zelle, umfassend
▪ eine Anoden- (14) und eine Kathodenhalbschale (15), die durch eine Membran (8) voneinander separiert werden, aufweisend die entsprechenden Elektroden,
▪ wobei die Anoden- (14) und die Kathodenhalbschale (15) jeweils eine Außenwandung (12 und 13) besitzen, die jeweils im Kontaktbereich beider Halbschalen Flanschbereiche (16 und 17) aufweisen, die rahmenartig ausgestaltet sind, und die Flanschbereiche (16 und 17) Montagebohrungen (4) aufweisen, die einen Innenbereich (23) und einen Außenbereich (24) der elektrochemischen Zelle kennzeichnen,
▪ eine Gas-Diffusions-Elektrode (6), die auf einem Stützsystem (7) aufliegt,
▪ ein poröses Medium (9), das auf der Gas-Diffusions-Elektrode (6) aufliegt,
▪ Vorrichtungen zum Zu- und Abführen von Gas (18,19) und Elektrolyt (20,21),
▪ mindestens eine umlaufende Rahmendichtung (3) im Kontaktbereich beider Halbschalen zwischen den rahmenartigen Flanschbereichen (16 und 17) der Außenwandungen (12 und 13) beider Halbschalen vorgesehen ist, die auf der Membran (8) aufliegt, wobei das poröse Medium (9) und die Gas-Diffusions-Elektrode (6) auf dem rahmenartigen kathodischen Flanschbereich (17) aufliegen und die umlaufende Rahmendichtung (3) in diesem Bereich mit dem porösen Medium (9) und der Gas-Diffusions-Elektrode (6) überlappt, wobei dieser Überlappungsbereich (2) mindestens zwei Profilierungen (1) aufweist,
**dadurch gekennzeichnet, dass**
die umlaufende Rahmendichtung im Kontaktbereich beider Halbschalen zwischen den rahmenartigen Flanschbereichen (16 und 17) außerhalb des Überlappungsbereichs von porösem Medium (9) und Gas-Diffusions-Elektrode (6) mindestens eine weitere Profilierung (22) aufweist und/oder mindestens eine verformbare Dichtschnur angeordnet ist, wobei die weitere Profilierung (22) und/oder die verformbare Dichtschnur (5) im Innenbereich (23) der elektrochemischen Zelle angeordnet ist.

2. Elektrochemische Zelle nach Anspruch 1 , **dadurch gekennzeichnet, dass** die Profilierungen (1) jedwede geometrische Ausgestaltung aufweisen, und bevorzugt eine Dreiecksform, eine Trapezform oder eine Halbkugelform aufweisen.

3. Elektrochemische Zelle nach einem der Ansprüche 1 oder 2, **dadurch gekennzeichnet, dass** die Rahmendichtung (3) bis zu Temperaturen von ca. 100°C aus einem Lauge- und Sauerstoff-resistenten Material aufgebaut ist.

4. Elektrochemische Zelle nach einem der vorstehenden Ansprüche , **dadurch gekennzeichnet, dass** die weitere Profilierung (22) jedwede geometrische Ausgestaltung aufweist, und bevorzugt eine Dreiecksform, eine Trapezform oder eine Halbkugelform aufweist.

5. Verwendung der elektrochemischen Zelle nach Anspruch 1 als Elektrolysezelle in einem Elektrolyseur, in dem eine Vielzahl von Elektrolysezellen stapelförmig angeordnet wird.

6. Verwendung der elektrochemischen Zelle nach Anspruch 1 als Batterie, in der chemische Energie durch eine elektrochemische Redoxreaktion in elektrische Energie umgewandelt wird.

7. Verwendung der elektrochemischen Zelle nach Anspruch 1 als Brennstoffzelle, in der chemische Energie durch Zuführen eines Brennstoffes und eines Oxidationsmittels in elektrische Energie umgewandelt wird.

## Claims

1. Electrochemical cell comprising
▪ an anode half-shell (14) and a cathode half-shell (15) separated from each other by a membrane (8), housing the corresponding electrodes,
▪ wherein the anode half-shell (14) and the cathode half-shell (15), each having an external wall (12 and 13) with frame-type flanged areas (16 and 17) in the contact area of both half-shells, and the flanged areas (16 and 17) being provided with mounting bores (4) marking an inner area (23) and an outer area (24) of the electrochemical cell,
▪ a gas-diffusion electrode (6) resting on a support system (7)
▪ a porous material (9) resting on the gas-diffusion electrode (6),
▪ devices for the inlet and outlet of gas (18,19) and electrolyte (20,21),
▪ at least one circumferential gasket frame (3) in the contact area of both half-shells between the frame-type flanged areas (16 and 17) of the external walls (12 and 13) of both half-shells, said gasket resting on the membrane (8), with the porous material (9) and the gas-diffusion electrode (6) resting on the frame-type cathodic flanged area (17) and the circumferential gasket frame (3) overlapping in this area with the porous material (9) and the gas-diffusion electrode (6), this overlapping area (2) featuring at least two shaped sections (1),
**characterised in that**
the circumferential gasket frame has at least one additional shaped section (22) and/or at least one shapeable sealing cord in the contact area of both half-shells between the frame-type flanged areas (16 and 17) outside of the overlapping zone of porous material (9) and gas-diffusion electrode (6), with the additional shaped section (22) and/or shapeable sealing cord (5) being arranged in the inner area (23) of the electrochemical cell.

2. Electrochemical cell according to claim 1, **characterised in that** the shaped sections (1) are of any geometric design and preferably have a triangle form, a trapezoidal form or a semi-spherical form.

3. Electrochemical cell according to claim 1 or 2, **characterised in that** the gasket frame (3) is made of a material which is caustic-proof and oxygen-resistant up to temperatures of approx. 100°C.

4. Electrochemical cell according to any one of the preceding claims, **characterised in that** the shaped-section (22) is of any geometric design and preferably has a triangle form, a trapezoidal form or a semi-spherical form.

5. The use of the electrochemical cell according to claim 1 as electrolysis cell in an electrolyser in which a plurality of electrolysis cells are arranged in stacks.

6. The use of the electrochemical cell according to claim 1 as a battery in which chemical energy is converted to electric energy by an electrochemical oxidation-reduction reaction.

7. The use of the electrochemical cell according to claim 1 as a fuel cell in which chemical energy is converted to electric energy by the addition of a fuel and an oxidant

## Revendications

1. Cellule électrochimique, comprenant
- une demi-coque anodique (14) et une demi-coque cathodique (15), qui sont séparées l'une de l'autre par une membrane (8), présentant les électrodes correspondantes,
- dans laquelle la demi-coque anodique (14) et la demi-coque cathodique (15) possèdent chacune une paroi extérieure (12 et 13), dont chacune présente, dans la zone de contact des deux demi-coques, des zones de rebord (16 et 17) qui ont une configuration de type cadre, et les zones de rebord (16 et 17) présentent des trous de montage (4) qui caractérisent une zone intérieure (23) et une zone extérieure (24) de la cellule électrochimique,
- une électrode à diffusion gazeuse (6), qui repose sur un système d'appui (7),
- un milieu poreux (9), qui repose sur l'électrode à diffusion gazeuse (6),
- des dispositifs pour amener et évacuer un gaz (18, 19) et un électrolyte (20, 21),
- au moins une garniture d'étanchéité périphérique du cadre (3) étant prévue dans la zone de contact des deux demi-coques entre les zones de rebord de type cadre (16, 17) des parois extérieures (12 et 13) des deux demi-coques, qui repose sur la membrane (8), le milieu poreux (9) et l'électrode à diffusion gazeuse (6) reposant sur la zone de rebord cathodique (17) de type cadre et recouvrant dans cette zone la garniture d'étanchéité périphérique du cadre (3) avec le milieu poreux (9) et l'électrode à diffusion gazeuse (6), cette zone de recouvrement (2) présentant au moins deux profils (1),
**caractérisée en ce que** la garniture d'étanchéité périphérique du cadre présente, dans la zone de contact des deux demi-coques, entre les zones de rebord de type cadre (16, 17) à l'extérieur de la zone de recouvrement du milieu poreux (9) et de l'électrode à diffusion gazeuse (6), au moins un profil supplémentaire (22) et/ou **en ce qu'**est disposé au moins un cordon d'étanchéité déformable, le profil supplémentaire (22) et/ou le cordon d'étanchéité déformable (5) étant disposé(s) dans la zone intérieure (23) de la cellule électrochimique.

2. Cellule électrochimique selon la revendication 1, **caractérisée en ce que** les profils (1) présentent une configuration géométrique quelconque, et de préférence une forme triangulaire, une forme trapézoïdale ou une forme semi-sphérique.

3. Cellule électrochimique selon l'une des revendications 1 ou 2, **caractérisée en ce que** la garniture d'étanchéité de cadre (3) est conçue en un matériau résistant aux bases et aux acides jusqu'à des températures d'environ 100 °C.

4. Cellule électrochimique selon l'une des revendications précédentes, **caractérisée en ce que** le profil supplémentaire (22) présente une configuration géométrique quelconque, et de préférence une forme triangulaire, une forme trapézoïdale ou une forme semi-sphérique.

5. Utilisation de la cellule électrochimique selon la revendication 1 en tant que cellule d'électrolyse dans un électrolyseur dans lequel un grand nombre de cellules électrolytiques sont empilées.

6. Utilisation de la cellule électrochimique selon la revendication 1 en tant que batterie, dans laquelle une énergie chimique est convertie en énergie électrique par une réaction électrochimique d'oxydoréduction.

7. Utilisation de la cellule électrochimique selon la revendication 1 en tant que pile à combustible, dans laquelle une énergie chimique est convertie en énergie électrique par amenée d'un combustible et d'un agent oxydant.
